# EUROPEAN PATENT APPLICATION

(11) **EP 1 162 318 A1**
(43) Date of publication of application: **12.12.2001**
(21) Application number: 01113452.5
(22) Date of filing: 02.06.2001
(51) Int. Cl.: E02F 9/00, B66F 9/075, B60R 3/00, B62D 21/16, B60K 15/063, B60R 11/06, B60K 15/073

(54) **Utility box for a work vehicle**

(30) Priority: 06.06.2000 US 587848
(71) Applicant: DEERE & COMPANY, Moline, Illinois 61265-8098 (US)
(72) Inventor: Gukeisen, Gary Allen, Dubuque, IA 52001 (US); Ward, Thomas Howard, Ventura, CA 93003 (US)
(74) Representative: Lau-Loskill, Philipp, Dipl.-Phys.

(57) **Abstract**

An integral utility box (50, 80) for a work vehicle (10) is provided with walls (56, 62, 64) defining an enclosed space for storing materials. The walls (62, 64) also defining a vertical pocket (54) having horizontal steps (44) extending across the pocket. The steps (44) comprising a plurality of horizontally extending bars having open slots formed between adjacent bars. The utility box (50, 80) is mounted to the side of the vehicle (10) by mounting brackets (52). A preferred utility box is a tool box (50) or a fuel tank (80).

## Description

The invention is directed to a utility box for a work vehicle provided with horizontal steps and to a work vehicle comprising a utility box.

Loader backhoes are a typical work vehicle having a frame and round engaging means for propelling the vehicle. Typically the frame rides on a front pair of steerable wheels and a rear pair of drive wheels. An operator's cab located on the vehicle is accessed from the side of the vehicle between the two pairs of wheels, Utility boxes for fuel, batteries and tools are located on the sides of the frame between the two pairs of wheels. These utility boxes may be provided with horizontal steps that are bolted onto the outside of the boxes. These steps are exposed to snags and obstructions and may become damage and damage the utility boxes themselves.

It is an object of the present invention to provide a utility box with horizontal steps that are protected from snags and other obstructions. It is another object of the present invention to provide a work vehicle with an appropriate utility box.

These objects are solved according to the invention by the teaching of one of the claims 1 or 10. Further advantageous arrangements and developments of the invention appear from the dependent claims.

In an advantageous embodiment of the present invention an integral utility box for a work vehicle is provided with walls defining an enclosed space storing materials. The walls also defining a vertical pocket having horizontal steps extending across the pocket. The steps comprising a plurality of horizontally extending bars having open slots formed between adjacent bars. The utility box is mounted to the side of the vehicle by mounting brackets.

The invention and further advantageous developments and arrangements of the invention will now be described and explained in more detail by way of example and with reference to the accompanying drawings in which:
Fig. 1 is a left side view of a work vehicle having the present invention,

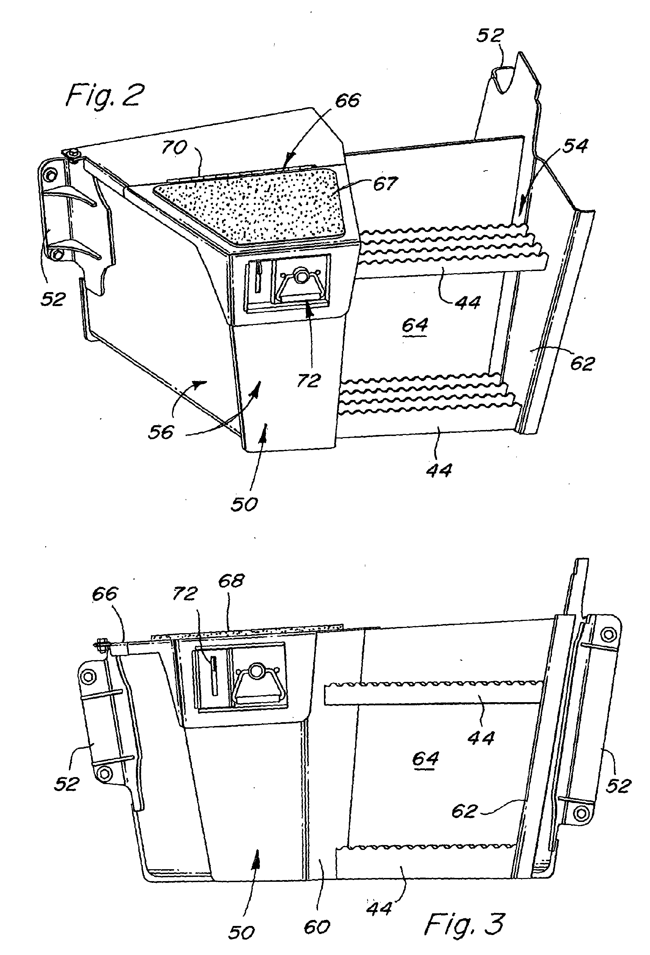

Fig. 2 is a perspective view of the left utility box,
Fig. 3 is a side view of the left utility box,

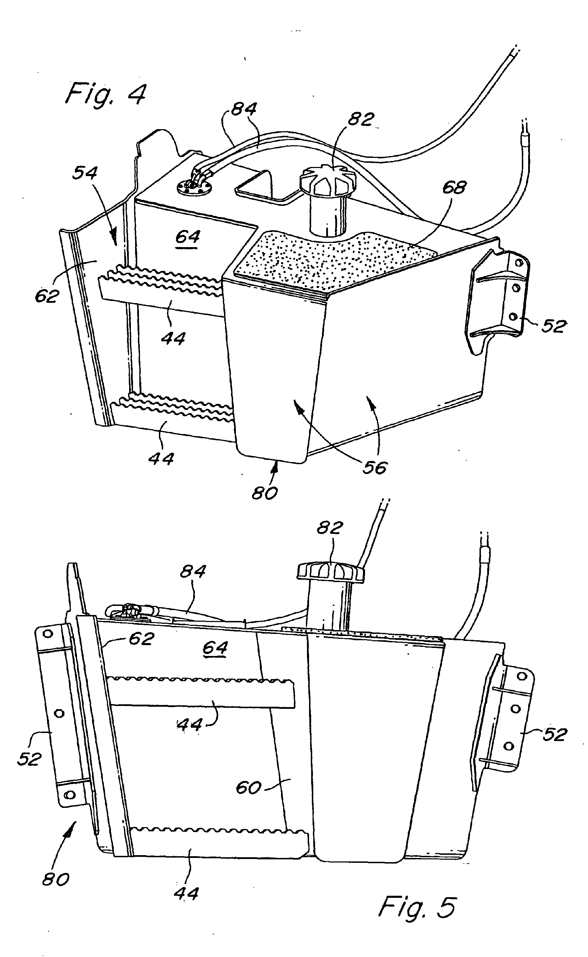

Fig. 4 is a perspective view of the right utility box and
Fig. 5 is a side view of the right utility box.

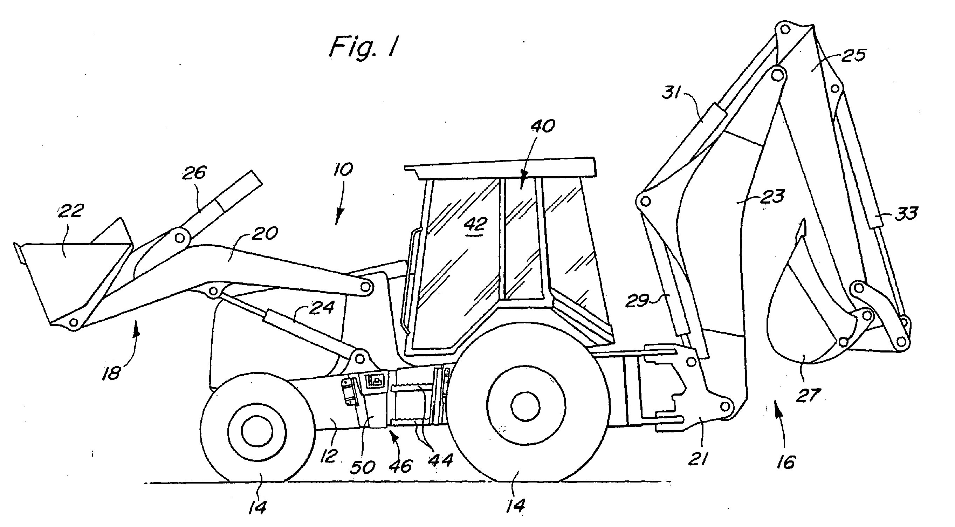

The work vehicle 10 illustrated in Figure 1 is a loader backhoe. The work vehicle 10 is provided with a frame 12 and ground engaging means 14 comprising wheels, which support and propel the frame 12. Although the ground engaging means 14 of the illustrated embodiment are wheels, the present invention could also be used on tracked work vehicles having steel or rubber tracks. The frame 12 is provided with two work implements, a rear mounted backhoe 16 and a front mounted loader 18. In the illustrated-wheeled configuration the front pair of wheels are steerable wheels, whereas the rear pair of wheels are drive wheels.

The loader is mounted to the front of the frame 12 and comprises lift arms 20 and a bucket 22. The lift arms 20 are provided with lift arm hydraulic cylinders 24 for lifting the arms 20 relative to the supporting structure 12. The bucket 22 is pivotally mounted to the end of the lift arms 20. Bucket 22 is provided with a bucket-tilt hydraulic cylinder 26 for tilting the bucket 22 relative to the lift arms 20.

The backhoe 16 is mounted to the rear of the frame 12 and comprises a swing frame 21, a boom 23, a dipperstick 25 and a bucket 27. The swing frame 21 is pivotally mounted to the frame 12 about a vertical pivot axis. Swing frame hydraulic cylinders, not shown, swing the swing frame 21 relative to the frame 12. The boom 23 is pivotally coupled to the swing frame about a horizontal pivot and is raised and lowered by a boom hydraulic cylinder 29. The dipperstick 25 is pivotally mounted to the boom about a horizontal axis and is pivoted relative to the boom by dipperstick hydraulic cylinder 31. The bucket 27 is curled and uncurled relative to the dipperstick by bucket hydraulic cylinder 33.

The work implements and the vehicle itself are controlled from an operator's cab 40. The operator gains access to the operator's cab 40 through side doors 42. To reach the side doors 42 the operator mounts horizontal steps 44, which are integral with right and left utility boxes 46. The left utility box 50 provides an enclosed space for storing batteries and tools. This utility box is mounted to the side of the frame 12 between the pairs of wheels by mounting brackets 52. The utility box 50 is an integral assembly having walls 56 defining an enclosed space for storing tools and batteries. The walls 56 also define an external vertical pocket 54. The vertical pocket 54 extends vertically and is open at the top and bottom. A first wall 60, a second wall 62 and a rear wall 64, defines the vertical pocket 54. The first and second walls 60 and 62 face one another. The horizontal steps 44 are located between the first and second walls and comprise a plurality of castellated horizontally extending bars 58. An open vertical slot is formed between the adjacent bars.

The top wall 66 of the utility box 50 is provided with an access door 67 for gaining access to the enclosed space defined by the walls 56. The access door 67 is pivotally coupled top the top wall by a hinge 70. A lockable latching structure and handgrip 72 secured the access door 67 to the utility box 50. The access door 67 is also provided with a gripping surface 68 for providing surer footing to an operator mounting the box.

The right hand utility box 80 is also an integral assembly having tank walls 56 defining an enclosed space and a vertical pocket 54. This utility box is also mounted to the side of the frame 12 by mounting brackets 52. The right hand box 80 comprises a fuel tank for enclosing fuel. As with the left hand box 50 the external vertical pocket 54 is formed by first, second and rear walls 60, 62 and 64. The horizontally extending steps 44 are again formed from castellated bars 58 extending between the first and second walls 60 and 62. The fuel tank is provided with an access door in the form of a fuel cap 82 that is screwed onto the throat of the fuel tank. Fuel lines 84 extend between the fuel tank and the engine. A portion of the fuel tank is located directly behind the horizontal steps 44 with rear wall 64 forming an enclosing wall of this portion.

The integral utility boxes of the present invention are easily mounted to the side of the work vehicle and provide a protected space for steps. As such the present invention should not be limited by the above-described embodiments, but should be limited solely by the claims that follow.

## Claims

1. A utility box for a work vehicle tractor, the utility box (50, 80) comprising:
an enclosure having walls (56, 62, 64), the walls (56, 64) defining an enclosed space to store material, the walls (62, 64) also defining an exterior vertical pocket (54);
horizontal steps (44) extending across the external vertical pocket (54) of the enclosure.

2. A utiltity box as defined by claim 1 wherein the walls (56, 62) are provided with mounting brackets (52) for securing said utility box (50, 80) to a work vehicle.

3. A utility box as defined by claim 1 or 2 wherein the external vertical pocket (54) has an open top and an open bottom.

4. A utility box as defined by one or more of the preceding claims wherein each step (44) comprises a plurality of horizontally extending bars having an open slot between adjacent bars.

5. A utility box as defined by one or more of the preceding claims wherein the external vertical pocket (54) is defined by a first side wall (60), a second side wall (62) and a rear wall (64) with the steps (44) extending between the first and second side walls (60, 62).

6. A utility box as defined by one or more of the preceding claims wherein the enclosure is provided with a top wall (66) having a door (67) through which the enclosed space can be accessed.

7. A utility box as defined by claim 6 wherein a hinge (70) pivotally couples the door (67) to the top wall (66).

8. A utility box as defined by one or more of the preceding claims wherein the utility box (80) is a fuel tank and the door comprises a removable cap (82).

9. A utility box as defined by one or more of the preceding claims wherein a portion of the enclosed space is enclosed by the rear wall (64) of the vertical pocket (54).

10. A work vehicle for performing a work operation, the work vehicle (10) comprising:
a frame (12) having a front, first and second sides and a rear;
ground engaging means (14) extending from the frame (12) for propelling said work vehicle (10);
at least one utility box (50, 80) attached to the frame (12), the utility box (50, 80) is provided with an enclosure having walls (56, 62, 64), the walls (56, 64) defining an enclosed space to store material, the walls (62, 64) also defining an external vertical pocket (54), horizontal steps (44) extend across the external vertical pocket (54) of the enclosure.

11. A work vehicle as defined by claim 10 wherein the ground engaging means (14) comprises first and second pairs of wheel rotatably coupled to the frame (12), the first pair of wheels being steerable.

12. A work vehicle as defined by claim 10 or 11 wherein the utility box is mounted to the first side of the frame (12) between the first pair of wheels (14) and the second pair of wheels (14) by mounting brackets (52).

13. A work vehicle as defined by on of the claims 10 to 12 wherein a fuel tank is mounted to the second side of the frame (12) between the first pair of wheels (14) and the second pair of wheels (14) by mounting brackets (52), the fuel tank way is provided with tank walls (56, 60, 62, 64), the tank walls (56, 60, 64) defining an enclosed fuel space to store fuel, the tank walls (60, 62) also define an external vertical pocket (54), the external vertical pocket (54) having an open bottom and an open top, a plurality of horizontal bars extend across the external vertical pocket (54) forming horizontal steps (44), the fuel tank having a removable cap (82).

14. A work vehicle as defined by claim 13 wherein a portion of the enclosed fuel space is enclosed by a rear tank wall (64) of the external vertical pocket (54).

15. A work vehicle as defined by one of the claims 10 to 14 wherein the front of the frame (12) is provided with a loader bucket (22) and the rear of the frame (12) is provided with a backhoe (16).

16. A work vehicle as defined by one of the claims 10 to 15 comprising at least one utility box (50, 80) as defined by one of the claims 1 to 9.
